# EUROPEAN PATENT APPLICATION

(11) **EP 2 937 632 A1**
(43) Date of publication of application: **28.10.2015**
(21) Application number: 13863913.3
(22) Date of filing: 19.12.2013
(51) Int. Cl.: F24C 3/00, G01F 1/34

(54) **GAS FLOW MEASUREMENT SYSTEM FOR DOMESTIC APPLIANCES**

(30) Priority: 21.12.2012 BR 102012032974
(71) Applicant: Whirlpool S.A., 04578-000 São Paulo SP (BR)
(72) Inventor: SILVA, Marcos Raphael da, 89221-404 Joinville - SC (BR)
(74) Representative: Soldatini, Andrea
(86) International application number: PCT/BR2013/000583
(87) International publication number: WO 2014/094098

(57) **Abstract**

The present invention relates to a gas flow measuring system for electric household appliances - more particularly, for cooking equipments - that is based on pressure reading at specific points in the tubing in order to provide the user with data such as gas outflow and/or consumption (instantaneous and overall), providing for a more efficient, controlled and safer use of the cooking equipment. Said system comprises: at least one pressure sensor cooperating with main tubing 2, said sensor determining the pressure in at least two points P0 and P1 of main tubing 2; at least one device cooperating with at least one pressure sensor, said device comprising means for recording and making calculations relative to the flow and/or consumption of the fluid running along main tubing 2, and means for providing the user with access to the data recorded and processed by the corresponding device.

## Description

### Field of the Invention

The present invention relates to a gas flow measuring system for electric household appliances - more particularly, for cooking devices - which is based on the reading of pressures taken at given points of the electric household appliance gas circuit in order to provide the user with data such as gas outflow and/or consumption (instantaneous and overall), providing for a more efficient and controlled use of the cooking device.

### Background of the Invention

As is known from the art, the cooking devices generally use, as a fuel for burning, petroleum liquefied gas or natural gas. To this end, the gas coming from the container storing it or coming directly from the public network is carried to the cooking equipment by a particular tubing up to the product inlet. A connection with a metal tube, commonly known as a "manifold", provides for the coupling between the feeding tubing (external to the product) and the delivery tubing (internal to the product) where gas valves are affixed commanded by handles operable by the users, from which the delivery ducts to the burners are derived.

However, it happens that the conventional devices used in the current state of the art do not provide the user with the means for monitoring the gas volume consumed. This prevents the consumer from being informed of his average consumption over the time, of his overall consumption and from estimating the remaining amount in the gas canister (thus preventing a cooking operation from being stopped before its completion due to the lack of fuel). In addition, the household electric appliance manufacturer may insert a leakage identification system in the circuit and warn the user or restrict the use of the product until a safe condition is restored. In an attempt to solve such drawbacks, some solutions have been developed that allow the fluid flow passing through a duct to be determined with the more particular use of cooking devices and the like, such as, for example, the system described in document US5861546, which discloses a fluid flow measuring system through a duct which, however, uses a section in addition to the tubing, which comprises a conical inner device for causing the acceleration and deceleration of the flow so that pressure readings can be made inside the device itself, by means of which the gas flow is later calculated.

It should be pointed out that the current state of the art has known for long methods similar to that of the aforementioned document necessarily involving sections with particular geometries for measuring the outflow by means of the pressure drop between two points.

It happens, however, that such methods have drawbacks that end up by interfering with the cooking device proper operation, hence with the pressure drop inherent to the reduction of the tubing diameter. Such pressure drop - or charge loss - in the particular case of electric household appliances, in which the pressures are normally low, the introduction of an additional charge loss entails issues in the feeding of the burners, requiring, as a consequence, a complete reconfiguration of components such as valves, injectors and even the burners, so that they can operate properly, that is, with the required maximum and minimum power levels, as well as with their intermediate points.

Another document, from the same applicant of the present invention, describes an alternative way for estimating gas consumption by reading the angular position of the valves. However, this method does not envisage any type of working pressure measurement - which obviously would provide more reliable since the working pressure varies significantly as a function of the characteristics of the pressure regulators (necessarily) arranged between the canister and the cooking appliance. It is to be noted, therefore, that the current state of the art is in need of solutions that will allow for measuring the gas flow in a simple, practical and efficient manner, which can be used in any cooking equipment without requiring the use of extra devices demanding adaptations and/or redesign of components.

### Objects of the Invention

It is therefore an object of the present invention to provide a gas flow measuring system for electric household appliances which will not require the installation of extra components in the electric appliance gas supply tubing.

It is another object of the present invention to provide a gas flow measuring system for electric household appliances that will not require adaptations and/or replacement of components already existing in the appliance.

It is still one object of the present invention to disclose a gas flow measuring system based on pressure measurement in (at least) two particular points in the appliance tubing. From the gas flow in the appliance, one can know the gas consumption during a given period of time, the gas volume still available (in case of bottled gas being used), and other related information.

### Summary of the Invention

The objects above mentioned are achieved by a gas flow measuring system for electric household appliances, mainly cooking devices. In one preferred embodiment of the invention, said system comprises at least one pressure sensor cooperating with the main tubing or manifold, said sensor determining the pressure in at least two points P0 and P1 of the main tubing.

The system also comprises at least one device cooperating with at least one pressure sensor, said device providing means for recording and making calculations relative to the flow and/or consumption of the fluid that runs through the main tubing. In addition, said system comprises means for enabling the user access to the data recorded and processed by the device cooperating with at least one pressure sensor; and at least one data display device cooperating with at least one pressure sensor, said data display device being incorporated into the cooking equipment.

Also, in one preferred embodiment of the invention, the means for providing the user with access to the data recorded and processed by the device cooperating with at least one pressure sensor comprise at least one of: a wired transmission, a transmission via a wireless network, or another suitable transmission medium.

### Brief Description of the Drawings

The present invention will be described in further detail below with reference to the accompanying drawings, in which:
Figure 1 illustrates a scheme for locating pressure reading points of the gas flow measuring system for electric household appliances which is the object of the present invention, and

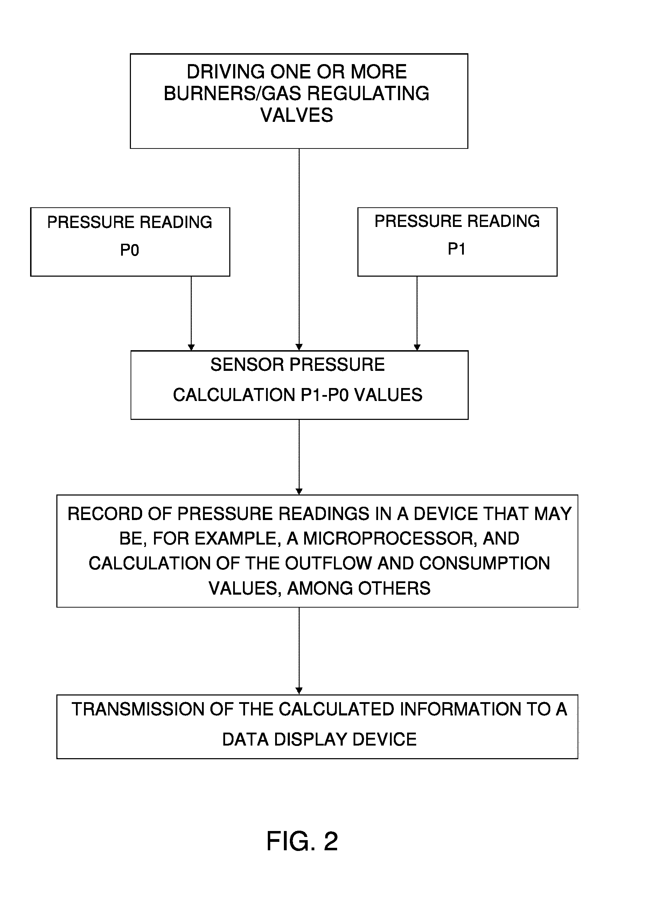

Figure 2 shows a flowchart of the operation of the gas flow measuring system represented in Figure 1.

### Detailed Description of the Invention

The object of the present invention will be described below in further detail, but in a illustrative and non-limiting manner, since the device herein set forth may comprise different structural and dimensional details and aspects without departing from the desired protective scope.

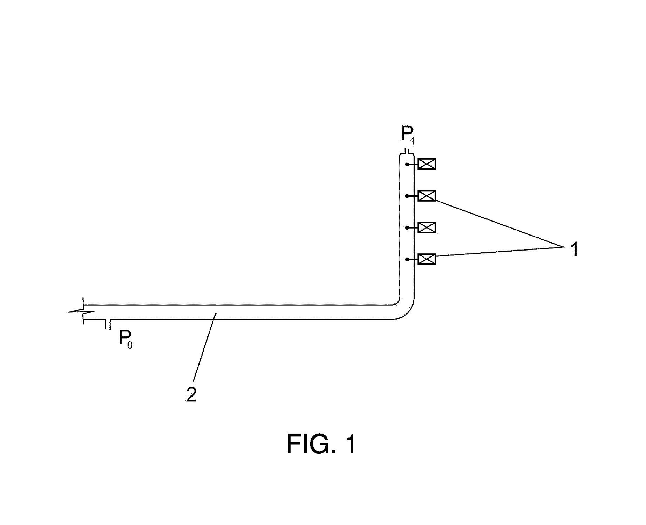

The present invention relates to a gas flow measuring system for electric household appliances comprising the use of at least one pressure sensor that reads the pressures of two particular in the tubing, as illustrated in appended Figure 1.

In the preferred embodiment of the invention, one pressure reading is made in the manifold, at a point prior to the burners being reached, and the other reading is preferably made at the end of the tubing, after passing through the burners' valves.

Furthermore, the system object of the present invention also comprises an electronic device - which may be a microprocessor, for example - for calculating and recording the gas flow, apart from storing the pressure data for future use, such as, for example, for making calculations on temporary and/or periodical consumption.

The data recorded and calculated by said electronic device can be transferred by any receiving device (such as, for example, cell phones, computers or the like) by any medium available, such as via a wired or wireless connection, for example.

Additionally, the cooking equipment may also contain some type of screen or information visual emission device, cooperating with said electronic device for indicating to the users the processed information.

From pressures P0 and P1, velocity V1 can be calculated. By knowing the tubing cross section, it is possible to calculate the outflow based on the velocity previously calculated.

Thus, without damaging the tubing' cross section and the need for reconfiguring the components, the gas outflow from the electric appliance is obtained in a simple, practical, economic and accurate manner.

By knowing the gas flow value in the tubing, it is possible to obtain the following information:
- instantaneous gas consumption;
- overall gas consumption;
- amount of gas still available in the liquefied petroleum gas canister;
- a warning indicating gas low level/need for gas canister acquisition and imminent replacement.

Or the combination of the indicated information.

It is also possible to obtain the following information:
- the feeding pressure level over the time, and
- an alarm for gas pressure regulator malfunction.

In short, the gas flow measuring system for electric household appliances subject matter of the present invention comprises the following steps:
- upon driving one or more burners of the cooking equipment, the gas flow running along the main tubing starts and the pressure reading at points P0 and P1 starts.
- the readings of P0 and P1 are captured by at least one pressure sensor;
- the resulting pressure differential value is transmitted to a device that records and makes calculations relative to the fluid velocity, thus allowing the fluid flow running along the main tubing to be calculated
- the storage of the information;
- transmission of the information to a data display device, which may be a screen incorporated into the cooking equipment, into a microcomputer or another related device, such information being transmissible via a wireless network, via cable or by any suitable transmission means;
- display of the information requested by the user.

It should be noted, therefore, that the device subject matter of the present invention solves the technical stated, providing for a more practical, efficient and versatile use than that achieved with the current state of the art.

It is important to point out that the sole purpose of the above description is to describe in an illustrative manner some preferred embodiments of the part fixing device according to the present invention. Therefore, those skilled in the art will appreciate that various modifications, variations and constructive combinations of the elements that perform the same function substantially the same way to achieve the same results remain within the protective scope as defined by the appended claims.

## Claims

1. A gas flow measuring system for electric household appliances, mainly cooking equipments provided with gas regulating valves for the burners, said gas regulating valves being fed by a main tubing, **CHARACTERIZED in that** said system comprises:
- at least one pressure sensor cooperating with the main tubing (2), said sensor determining the pressure at least at two points P0 and P1 of the main tubing (2);
- at least one device cooperating with at least one pressure sensor, said device comprising means for recording and making calculations relating to the flow and/or consumption of the fluid running along the main tubing (2); and
- means for providing the user with access to the data recorded and processed by the device cooperating with at least one pressure sensor.

2. A system, according to claim 1, **CHARACTERRIZED** in that said system additionally comprises at least one data display device cooperating with at least a data calculating and/or recording device, cooperating with at least one pressure sensor.

3. A system, according to claim 2, **CHARACTERIZED in that** said data display device is integrated into the cooking equipment.

4. A system, according to claim 1, **CHARACTERIZED in that** the access to the data recorded and processed by the data calculating and/or recording device, in cooperation with at least one pressure sensor, is provided by at least one suitable transmission means, whether via cable, wireless network or another transmission means.
